# EUROPÄISCHE PATENTSCHRIFT

(11) **EP 2 326 822 B1**
(45) Veröffentlichungstag und Bekanntmachung des Hinweises auf die Patenterteilung: **09.09.2015**
(21) Anmeldenummer: 09780515.4
(22) Anmeldetag: 13.07.2009
(51) Int. Cl.: F02K 3/04, F01D 25/00

(54) **TESTVORRICHTUNG FÜR DEN FAN EINES FLUGZEUGTRIEBWERKS**
TEST DEVICE FOR THE FAN OF AN AIRCRAFT ENGINE
DISPOSITIF D'ESSAI POUR LA SOUFFLANTE D'UNE TURBINE D'AVION

(30) Priorität: 09.09.2008 DE 102008041916
(43) Veröffentlichungstag der Anmeldung: 01.06.2011
(73) Patentinhaber: Anecom Aerotest GmbH, 15745 Wildau (DE)
(72) Erfinder: SAND, Stefan, 12489 Berlin (DE); AHLERS, Edmund, 15711 Zeesen (DE); HEYDORN, Carsten, 15749 Mittenwalde (DE); DAUM, Carsten, 12489 Berlin (DE); STEINBORN, André, OT Zeesen 15711 Königs Wusterhausen (DE); HOBSON, Ian, Nuneaton Warwickshire CV 10 9SA (GB); RIEPE, Axel, 10967 Berlin (DE)
(74) Vertreter: adares Patent- und Rechtsanwälte Reininger & Partner
(86) Internationale Anmeldenummer: PCT/EP2009/058926
(87) Internationale Veröffentlichungsnummer: WO 2010/028881

(56) Entgegenhaltungen:
- Y. Khaletskiy et al.: "acoustic test facility for aeroengine fans" Acoustics 08 Paris Programme, [Online] 1. Juli 2008 (2008-07-01), Seiten 1835-1838, XP002574526 Gefunden im Internet: URL:http://intellagence.eu.com/acoustics20 08/acoustics2008/cd1/data/articles/001464. pdf> [gefunden am 2010-03-17]
- Anonymous: "AneCom AeroTest - Aerospace and gas turbine development and Test Services"[Online] 11. März 2006 (2006-03-11), XP002574527 Berlin (GE) Aerospace-technology Gefunden im Internet: URL:http://web.archive.org/web/20060311194 218/http://www.aerospace-technology.com/co ntractors/manufacturing/anecom/> [gefunden am 2010-03-22]
- J. Julliard et al.: "Active Control of the Directivity of Fan Tones Noise" In: vv: "the Symposium of the RTO Applied Vehicle Technology Panel (AVT) held in Braunschweig, Germany, 8-11 May 2000." Juni 2000 (2000-06), NATO Research and Technology Organisation , XP002574528 ISBN: 928370018XSeiten 18-1-18-10, Abbildung 1
- D. Mueller et al.: "Europe's Largest Aero Acoustic Test Facility for Aero Engine Fans - The Development and Operation of the AneCom Aerotest Anechoic Chamber"[Online] 25. Mai 2005 (2005-05-25), XP002574529 11th AIAA/CEAS Aeroacoustics Conference (26th AIAA Acoustics Conference) Gefunden im Internet: URL:http://pdf.aiaa.org/preview/CDReadyMAE RO05_1140/PV2005_3050.pdf> [gefunden am 2010-03-18]

## Beschreibung

Die Erfindung betrifft eine Testvorrichtung für den Fan eines Flugzeugtriebwerks zur Ermittlung des akustischen und aerodynamischen Verhaltens und der Leistungsdaten, die ein an einer Prüfstandswand stirnseitig angebrachtes Außengehäuse zur Aufnahme des Fans und einer mit diesem verbundenen Antriebswelle sowie von Messeinrichtungen umfasst.

Ein wesentliches Ziel bei der Entwicklung und Herstellung von Flugzeugtriebwerken ist die Reduzierung der Lärmemission. Der Fan (Triebwerksgebläse), der den wesentlichen Teil des Triebwerksschubes erzeugt, gilt gleichzeitig als eine der Hauptlärmquellen eines Triebwerks, so dass sich die auf die Verringerung der Lärmemission gerichteten Untersuchungen auf den Fan und dessen Betriebsverhalten und akustische Wirkungen konzentrieren. Der durch den Fan bewirkte Lärm wird einerseits über den Lufteinlass am Fangehäuse und andererseits über den Luftauslass des Bypasskanals (Mantelstromkanal) nach außen abgestrahlt, wobei eine wesentliche Ursache für die stromab des Fans erzeugte Lärmemission durch das Zusammenwirken mit den im Strömungskanal hinter dem Fan angeordneten Einbauten, insbesondere den Leitschaufeln, bedingt ist.

Untersuchungen zur Feststellung der von einem Fan ausgehenden Lärmemission werden üblicherweise mit einer Testvorrichtung durchgeführt, die ein an der Wand eines Prüfstandes fest installiertes, an den jeweiligen Fan angepassten Außengehäuse aufweist. Die mit einem Antrieb verbundene Antriebswelle des Fans ist in mehreren Lagern am Außengehäuse abgestützt. Eine derartige Prüfanordnung ist insofern nachteilig, als akustische Untersuchungen aufgrund des als tragende Struktur ausgebildeten Außengehäuses in der Regel nur stromauf des Fans durchgeführt werden können. Selbst um die Auswirkung unterschiedlicher Triebwerksgebläse-Konfigurationen in dem stromauf des Fans liegenden Teil des Strömungskanals untersuchen zu können und daraus bestimmte Maßnahmen zur Lärmreduzierung bei der Entwicklung von Triebwerken herleiten zu können, sind jedoch umfangreiche Umbaumaßnahmen und in vielen Fällen, zum Beispiel bei den Fans unterschiedlicher Triebwerke, sogar vollständige Neukonstruktionen der Versuchsanordnung erforderlich, die mit einem hohen Zeit- und Kostenaufwand verbunden sind. Der in Strömungsrichtung hinter dem Fan liegende und als Tragstruktur fungierende Strömungskanal im Außengehäuse ist nicht entsprechend den tatsächlichen Gegebenheiten in einem Triebwerk ausgebildet und deshalb für akustische Untersuchungen ungeeignet. Andererseits bietet aber die bei einem üblichen Fantriebwerk tatsächlich vorgesehene Ausbildung des stromab des Fans liegenden Strömungskanals bzw. der in diesem angeordneten Einbauten, wie zum Beispiel Leitschaufeln und akustische sowie aerodynamische Auskleidungen, wichtige Ansatzpunkte für die Untersuchung und die Reduzierung der Lärmemission, die bisher unberücksichtigt geblieben sind.

Aus der online Veröffentlichtung "acoustic test facility for aeroengine fans", Y. Khaletskiy, Acoustics 08 Paris Programme 29. Juni - 4. Juli 2008, The Journal of the Acoustical Society of America, Seiten 1835 - 1838, ist eine Testvorrichtung bekannt.

Der Erfindung liegt die Aufgabe zugrunde, eine Testvorrichtung für den Fan von Flugzeugtriebwerken anzugeben, die für unterschiedliche Fankonfigurationen realitätsnah und mit geringem baulichen Aufwand die Untersuchung der akustischen und aerodynamischen Wirkungen unterschiedlich ausgebildeter Fans in Verbindung mit im Strömungskanal angeordneten Einbauten erlaubt und die Entwicklung von Triebwerken mit verminderter Lärmemission ermöglicht.

Erfindungsgemäß wird die Aufgabe mit einer gemäß den Merkmalen des Patentanspruchs 1 ausgebildeten Testvorrichtung gelöst. Weitere Merkmale und zweckmäßige Ausgestaltungen der Erfindung sind Gegenstand der Unteransprüche.

Der Grundgedanke der Erfindung besteht in der Ausbildung der Testvorrichtung aus einer stationären inneren, von der Prüfstandswand auskragenden Grundstruktur, in der die Antriebswelle für den zu prüfenden Fan gelagert ist, sowie aus mobilen und austauschbaren, mit angeschlossenen optischen Mitteln zueinander ausrichtbaren Außengehäusemodulen, austauschbaren Einbauten zur Luftleitung und Lärmreduzierung sowie an eine modular ausgebildete Telemetrieeinheit angeschlossenen austauschbaren Messeinrichtungen zur Ermittlung von Leistungsdaten und der durch den Fan und die Einbauten bedingten aerodynamischen und akustischen Verhältnisse. Mit einer auf dieser Basis ausgebildeten Testvorrichtung kann mit vergleichsweise geringem baulichen Aufwand eine Vielzahl von durch die Gestaltung des Fans und der im Strömungskanal hinter dem Fan liegenden Einbauten beeinflussten Daten erfasst werden, aus denen Rückschlüsse für die Verringerung der Lärmemission, eine optimale aerodynamische Gestaltung des Fans und der Einbauten und eine Leistungssteigerung gezogen werden können.

Die statische Grundstruktur zur Abstützung der Antriebswelle für den jeweils untersuchten Fan umfasst ein an der Prüfstandswand befestigtes, aus drei konzentrisch angeordneten Tragringen bestehendes Traggehäuse mit an den beiden inneren Tragringen auskragend gehaltenem äußeren und inneren Tragrohr, deren freie Enden durch Tragschaufeln miteinander verbunden sind und durch eine Stützstruktur verlängert sind. An dieser Stützstruktur sowie am inneren Tragrohr liegenden Lagerstützringen ist die Antriebswelle für den Fan über Lager abgestützt.

Der mobile, austauschbare Teil der Testvorrichtung umfasst mehrere abdichtend und lösbar miteinander verbundene Außengehäusemodule, bestehend aus einem den Fan umgebenden Fangehäusemodul, mindestens einem mit Messelementen versehenen Messgehäusemodul sowie Strömungskanalmodulen, die zwischen den Messgehäusemodulen bzw. einem Messgehäusemodul und dem fest mit der Prüfstandswand verbundenen äußeren Tragring des Traggehäuses angeordnet sind.

Die austauschbaren Messelemente sind an einer in den Messgehäusemodulen angeordneten schwenkbaren Trommel angebrachte, vorzugsweise an einem Messrechen gehaltene Sensoren zur Erfassung der Lärmemission und anderer strömungstechnisch relevanter Daten. An dem an den Fangehäusemodul anschließenden Außengehäusemodul sind zur Aufteilung und Weiterleitung des vom Fan erzeugten Luftstroms Leitschaufeln für den Bypassluftstrom sowie zwei konzentrisch angeordnete Rohrelemente mit Leitschaufeln zur Ausbildung des Kernstromkanals austauschbar angebracht. Die Leitschaufeln sind somit nichttragende Strukturen, die unabhängig von der Rotorlagerung nur am Außengehäuse befestigt sind.

In dem stromab des Fans liegenden Teil des Fangehäusemoduls sowie in dem anschließenden Bypassstromkanal kann - abgesehen von dem mit Mikrofonen bestückten Teil des zweiten Messgehäusemoduls - eine akustische oder aerodynamische Auskleidung austauschbar angeordnet sein. Vorzugsweise ist die Auskleidung in Form von halbschalenförmigen Linern ausgebildet, die so aneinandergefügt sind, dass eine störungsfreie Luftströmung gewährleistet ist. Derartige Auskleidungen können auch stromauf des Fans an der Innenumfangsfläche des Fangehäusemoduls vorgesehen sein.

Um eine exakte konzentrische Anordnung und Ausrichtung der mobilen Außengehäusemodule zu gewährleisten, sind das Fangehäusemodul und die zwischen diesem und dem Traggehäuse angeordneten Messgehäusemodule auf in Schienen verschiebbar angeordneten Stützsäulen in X-, Y- und Z-Richtung einstellbar befestigt, wobei die genaue koaxiale Ausrichtung der einstellbaren Außengehäusemodule mittels am Fangehäusemodul befestigten Präzisionsfernrohren sowie an den vorderen und hinteren Flanschen der Messgehäusemodule und am stationären Traggehäuse angebrachten optischen Linsen erfolgt. Die optischen Linsen und Präzisionsfernrohre sind vorzugsweise paarweise einem bestimmten Winkel zueinander versetzt angebracht.

Zum Ausgleich von temperaturbedingten axialen und radialen Dehnungen sind die an einen Messgehäusemodul anschließenden Strömungskanalmodule in einem Schiebesitz mit sich aufgrund einer Federvorspannung ausdehnenden Dichtungselementen gelagert.

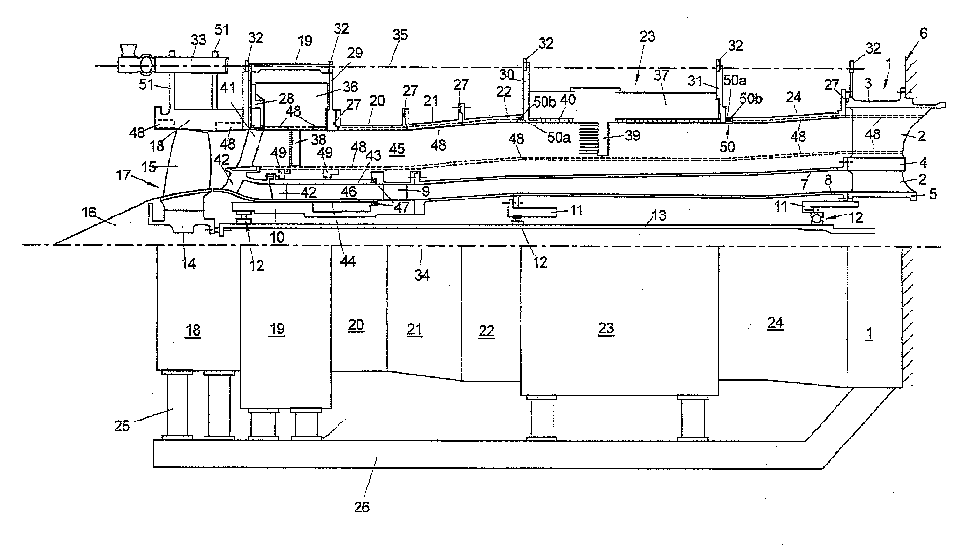

Ein Ausführungsbeispiel der Erfindung wird anhand der Zeichnung, deren einzige Figur eine schematische, teilweise im Schnitt wiedergegebene Darstellung einer modular ausgebildeten Testvorrichtung für Triebwerksgebläse zeigt, näher erläutert.

Die Testvorrichtung besteht zum einen aus einer an der senkrechten Wand des Prüfstandes gehaltenen Grundstruktur, die für die akustischen und aerodynamischen Messungen und die Leistungserfassung im stromab des Fans liegenden Strömungskanal von geringer Bedeutung ist und für die Prüfung des Fans unter verschiedenen Testbedingungen und auch für verschiedene Fankonfigurationen im Wesentlichen unverändert bleibt. Diese statische Grundstruktur umfasst ein Traggehäuse 1, das aus drei konzentrisch angeordneten, über Rippen 2 verbundenen Tragringen 3 bis 5 besteht und über den äußeren Tragring 3 fest mit der senkrechten Prüfstandswand 6 verbunden ist. An dem mittleren Tragring 4 ist ein äußeres Tragrohr 7 und an dem inneren Tragring 5 ist ein inneres Tragrohr 8 befestigt. Das äußere und das innere Tragrohr 7, 8 sind an der freien Stirnseite über eine Vielzahl von Tragschaufeln 9 sowie einen an das innere Tragrohr 8 anschließenden Stützring 10 miteinander verbunden. Am Innenumfang des inneren Tragrohrs 8 ist im vorderen und hinteren Bereich jeweils ein Lagerstützring 11 angebracht. In der zuvor beschriebenen Tragstruktur ist konzentrisch eine in Lagern 12 abgestützte Antriebswelle 13 angeordnet, die lösbar mit der Fanscheibe 14 und am hinteren Ende mit einem Antrieb (nicht dargestellt) verbunden ist.

Die Fanscheibe 14 bildet zusammen mit den an dieser befestigten Fanschaufeln 15 und dem Einlaufkonus 16 den Fan 17, der Teil der mobilen bzw. austauschbaren Struktur der Testvorrichtung ist und dessen akustisches und aerodynamisches Verhalten in Verbindung mit den stromab des Fans anschließenden Strömungskanälen, insbesondere dem Bypassstromkanal 45 (Mantelstromkanal) und den diesem zugeordneten Einbauten, geprüft werden soll.

Der austauschbare Teil der Testvorrichtung wird entsprechend dem jeweils zu prüfenden Fan und den jeweils geforderten unterschiedliche Prüfbedingungen projektiert, so dass aufgrund der unveränderlichen Grundstruktur mit vergleichweise geringem Aufwand unterschiedliche Fankonfigurationen unter bestimmten Bedingungen geprüft werden können. Dieser individuell projektierte Teil der Testvorrichtung besteht aus einer Mehrzahl mobiler, über Dichtungselemente 27, 50 abdichtend miteinander verbundener Außengehäusemodule, die - in Strömungsrichtung axial aneinander gereiht - ein im Bereich des Fans 17 angeordnetes Fangehäusemodul 18, ein im Leitschaufelbereich des an den Fan anschließenden Strömungskanals angeordnetes erstes Messgehäusemodul 19, erste bis dritte aufeinander folgende, sich konisch erweiternde Strömungskanalmodule 20, 21 und 22, ein zweites Messgehäusemodul 23 und ein viertes, sich konisch erweiterndes Strömungskanalmodul 24 aufweist. Das Fangehäusemodul 18 sowie das erste Messgehäusemodul 19 und das zweite Messgehäusemodul 23 sind-in X-, Y- und Z-Richtung einstellbar - an Stützsäulen 25 gehalten, die in integral mit dem Traggehäuse 1 verbundenen Führungsschienen 26 in axialer Richtung verschiebbar gehalten sind. Die ersten bis dritten Strömungskanalmodule 20 bis 22 sind untereinander und mit dem ersten Messgehäusemodul 19 verschraubt. Das vierte Strömungskanalmodul 24 ist mit dem fest an der Wand 6 des Prüfstandes installierten, eine stationäre Außengehäusesektion bildenden Traggehäuse 1 verschraubt und gegenüber diesem durch ein Dichtungselement 27 (O-Ring) abgedichtet. Die dritten und vierten Strömungskanalmodule 22 und 24 sind zum - aufgrund von Temperaturschwankungen erforderlichen - Dehnungsausgleich über einen Schiebesitz und ein spezielles Dichtelement 50 schwimmend am zweiten Messgehäusemodul 23 gelagert. Das Dichtungselement 50 ist ein im Querschnitt C-förmiger Dichtring 50a mit in diesem angeordneter, sich aufgrund einer Federvorspannung ausdehnender Spiralfeder 50b, so dass der Dichtring 50a der temperaturbedingten radialen Dehnung des Außengehäuses folgen kann.

Das erste Messgehäusemodul 19 und das zweite Messgehäusemodul 23 weisen jeweils vordere und hintere Flansche 28 bis 31 auf, an deren oberem Außenrand jeweils ein Paar im Winkel von 120° zueinander versetzt angeordneter, jeweils ein Fadenkreuz aufweisender optischer Linsen 32 positioniert ist. Zwei weitere optische Linsen 32 sind in gleicher Position an dem stationären Traggehäuse 1 angebracht, denen am Fangehäusemodul 18 an Flanschen 51 befestigte Präzisionsfernrohre 33 gegenüberstehen. (Die um 120° versetzte Anordnung der Präzisionsfernrohre und optischen Linsen ist in der Zeichnung nicht dargestellt.) Mit Hilfe der Präzisionsfernrohre 33 und der am Traggehäuse 1 vorgesehenen optischen Linsen 32 wird zunächst das an den Stützsäulen in X-, Y- und Z-Richtung einstellbare Fangehäusemoduls 18 konzentrisch zur Mittelachse 34 bzw. Antriebswelle 13 ausgerichtet. Anschließend werden auch die anderen - auf den Stützsäulen 25 gehaltenen und einstellbaren Außengehäusemodule, an denen die optische Linsen 32 angebracht sind, entlang der optischen Achsen 35 koaxial ausgerichtet, so dass der austauschbare Teil der Testvorrichtung mit hoher Genauigkeit konzentrisch zu deren stationärer Grundstruktur ausgerichtet ist.

Das erste Messgehäusemodul 19 und das zweite Messgehäusemodul 23 weisen jeweils eine schwenkbare Trommel 36, 37 auf, an der ein mit Mikrofonen zur Messung der Schallemission bestückter Messrechen 38, 39 zur Messung der Schallemission austauschbar angebracht ist. An der schwenkbaren Trommel 37 des Messgehäusemoduls 23 sind weitere Mikrofone 40 befestigt.

An dem ersten Messgehäusemodul 19 sind Bypassstrom-Leitschaufeln 41 gehalten, die über erste und zweite Kernstrom-Leitschaufeln 42 mit einem äußeren und einem inneren Rohrelement 43, 44 verbunden sind, so dass der stromab des Fans 17 liegende Strömungskanal in einen - vom Außengehäuse sowie dem äußeren Rohrelement 43 und dem äußeren Tragrohr 7 begrenzten - Bypassstromkanal 45 und einen von den äußeren und inneren Rohrelementen 43, 44 bzw. den Tragrohren 7, 8 gebildeten Kernstromkanal 46 aufgeteilt wird. Die äußeren und inneren Rohrelemente 43, 44 sind mit axialem und radialem Spalt über Dichtringe 47 an der mit den Tragschaufeln 9 verbundenen Stützstruktur 10 abdichtend und lösbar gehalten und bilden - zusammen mit den Bypassstrom- und Kernstrom-Leitschaufeln 41, 42 - ein mobiles, austauschbares und für den jeweiligen Anwendungsfall projektiertes Bauteil der Testvorrichtung. Das heißt, die Bypassstrom- und die Kernstrom-Leitschaufeln 41, 42 sind unabhängig von der statischen Grundstruktur und der Antriebwelle 13 nur am Außengehäuse gehalten und können frei gestaltet und ausgetauscht werden.

Ein variables und für unterschiedliche Einsatzfälle austauschbares Bauteil ist weiterhin die im Bypassstromkanal 45 angeordnete akustische Auskleidung (akustische Liner)48. Anstelle oder in Kombination mit der akustischen Auskleidung kann für aerodynamische Untersuchungen auch eine aerodynamische Auskleidung (aerodynamische Liner) vorgesehen sein. Auch diese Bauteile können aufgrund des modular ausgebildeten Außengehäuses mit vergleichsweise geringem Aufwand ausgetauscht werden. Die akustische Auskleidung 48 besteht aus halbschalenförmigen Linersegmenten, wobei die jeweils in Umfangsrichtung und in Strömungsrichtung aufeinander folgenden, bündig zueinander angeordneten Linersegmente durch eine Buchse-Stift-Kombination (nicht dargestellt) miteinander verbunden sind. Auf diese Weise ist ein schneller und unkomplizierter Wechsel der akustischen Auskleidung 48 möglich und die an der Oberfläche der akustischen Auskleidung vorhandenen Störungen beschränken sich auf die zwischen den Linersegmenten axial verlaufenden und umlaufenden Stoßstellennähte. Die Linersegmente sind in der vorliegenden Ausführungsform am Außenumfang des Bypassstromkanals 45 verklebt und an dessen Innenumfang über Adapterelemente 49 abgestützt. Auch an der Innenumfangsfläche des Fangehäusemoduls 18 stromauf und stromab des Fans 17 ist eine aus austauschbaren Linersegmenten gebildete akustische Auskleidung 48 vorgesehen.

Die Übertragung der im Bypassstromkanal 45 erfassten Messwerte erfolgt mit einer ebenfalls als modulares (steckbares) System ausgebildeten Telemetrieeinheit (nicht dargestellt).

Mit der zuvor beschriebenen, modular aus einer stationären Grundstruktur zur Abstützung der den Fan 17 antreibenden Antriebswelle 13 sowie aus mobilen Außengehäusemodulen mit austauschbaren Einbauten ausgebildeten Testvorrichtung sind mit vergleichsweise geringem baulichen Aufwand oder baulichen Änderungen umfassende Untersuchungen in Bezug auf die Leistung und die Schallemission in Abhängigkeit von dem Fan und der Ausbildung des stromab des Fans vorhandenen Strömungskanals möglich. Das Auswechseln der Einbauten und die erneute Montage der Außengehäusemodule, die an Stützsäulen in X-, Y- und Z-Richtung einstellbar und mit einem optischen System präzise zueinander ausgerichtet werden können, ist mit einem gegenüber einer Neukonstruktion vergleichsweise geringen Zeitaufwand verbunden. Auch der Austausch der Außengehäusemodule gegen neu gefertigte Außengehäusemodule ist mit einem deutlich geringeren Aufwand verbunden als der vollständige Neubau der Testvorrichtung.

### Bezugszeichenliste

- 1: Traggehäuse
- 2: Rippen von 1
- 3: Tragring v. 1
- 4: Tragring v. 1
- 5: Tragring v. 1
- 6: Prüfstandswand
- 7: äußeres Tragrohr
- 8: inneres Tragrohr
- 9: Tragschaufeln
- 10: Stützstruktur
- 11: Lagerstützring
- 12: Lager
- 13: Antriebswelle
- 14: Fanscheibe
- 15: Fanschaufeln
- 16: Einlaufkonus
- 17: Fan
- 18: Fangehäusemodul
- 19: erstes Messgehäusemodul
- 20: erstes Strömungskanalmodul
- 21: zweites Strömungskanalmodul
- 22: drittes Strömungskanalmodul
- 23: zweites Messgehäusemodul
- 24: viertes Strömungskanalmodul
- 25: Stützsäulen
- 26: Führungsschienen
- 27: Dichtungselement
- 28: vorderer Flansch v. 19
- 29: hinterer Flansch v. 19
- 30: vorderer Flansch v. 23
- 31: hinterer Flansch v. 23
- 32: optische Linsen
- 33: Präzisionsfernrohr
- 34: Mittelachse
- 35: optische Achse
- 36: schwenkbare Trommel
- 37: schwenkbare Trommel
- 38: Messrechen
- 39: Messrechen
- 40: Mikrofone
- 41: Bypassstrom-Leitschaufel
- 42: Kernstrom-Leitschaufel
- 43: äußeres Rohrelement
- 44: Inneres Rohrelement
- 45: Bypassstromkanäl
- 46: Kernstromkanal
- 47: Dichtring
- 48: akustische Auskleidung
- 49: Adapterelemente
- 50: spez. Dichtelement
- 50a: C-förmiger Dichtring
- 50b: Spiralfeder
- 51: Flansche v. 18

## Patentansprüche

1. Testvorrichtung für den Fan eines Flugzeugtriebwerks zur Ermittlung des akustischen und aerodynamischen Verhaltens und der Leistungsdaten, die ein an einer Prüfstandswand (6) stirnseitig angebrachtes Außengehäuse zur Aufnahme des Fans (17) und einer mit diesem verbundenen Antriebswelle (13) umfasst, wobei
eine als an der Prüfstandswand (6) gehaltener Kragträger ausgebildete stationäre innere Grundstruktur (1, 7 bis 11) zur Abstützung der Antriebswelle (13) dient; und im Innern des Außengehäuses austauschbar angeordnete Einbauten (41 bis 44) zur Weiterleitung des vom Fan (17) erzeugten Luftstroms zu einem Bypass- und einem Kernstromkanal (45, 46) und als akustische und/oder aerodynamische Auskleidung (48) des Bypassstromkanals (45) vorgesehen sind, **dadurch gekennzeichnet, dass** das Außengehäuse mehrere lösbar und abdichtend miteinander verbundene, mobile und austauschbare Außengehäusemodule (18 bis 24) umfasst, die jeweils flurseitig abgestützt und in X-, Y- und Z-Richtung einstellbar sind und denen zur koaxialen Ausrichtung eine optischen Vorrichtung zugeordnet ist; und
im Bypassstromkanal (45) austauschbar angeordnete, an eine modular ausgebildete Telemetrieeinheit angeschlossene Messvorrichtungen (38 bis 40) vorgesehen sind.

2. Testvorrichtung nach Anspruch 1, **dadurch gekennzeichnet, dass** die stationäre Grundstruktur ein aus drei konzentrisch angeordneten Tragringen (3 bis 5) bestehendes, an der Prüfstandswand (6) befestigtes Traggehäuse (1) mit jeweils einem von dessen inneren Tragringen (4, 5) auskragenden äußeren Tragrohr (7) und inneren Tragrohr (8), an dem die Antriebswelle (13) über eine Stützstruktur (10) und Lagerstützringe (11) sowie Lager (12) abgestützt ist, umfasst, wobei die freien Enden der Tragrohre (7, 8) über Tragschaufeln (9) miteinander und mit der Stützstruktur (10) verbunden sind und der äußere Tragring (3) des Traggehäuses (1) einen stationären Teil des Außengehäuses bildet.

3. Testvorrichtung nach Anspruch 1, **dadurch gekennzeichnet, dass** der mobile Teil des Außengehäuses ein Fangehäusemodul (18) und mindestens ein mit Messeinrichtungen zur Erfassung des akustischen und aerodynamischen Verhaltens und der Leistung des Fans (17) in Verbindung mit den stromab anschließenden Einbauten versehenes Messgehäusemodul (19, 23), die an Stützsäulen (25) in X-, Y- und Z-Richtung verstellbar befestigt sind, sowie zwischen den Messgehäusemodulen (19, 23) und dem Traggehäuse (1) und unmittelbar an diesen befestigte Strömungskanalmodule (20 bis 22, 24) umfasst, wobei zum Dehnungsausgleich mindestens ein Strömungskanalmodul in einem Verschiebesitz abdichtend gelagert ist.

4. Testvorrichtung nach Anspruch 3, **dadurch gekennzeichnet, dass** die Stützsäulen (25) in am Traggerüst (1) des Prüfstandes integral angebrachten Führungsschienen (26) verschiebbar angeordnet sind.

5. Testvorrichtung nach Anspruch 3, **gekennzeichnet durch** ein an das Fangehäusemodul (18) anschließendes erstes Messgehäusemodul (19) und ein zweites Messgehäusemodul (23) mit zwischen diesen angeordneten ersten bis dritten Strömungskanalmodulen (20 bis 22) und einem zwischen dem zweiten Messgehäusemodul (23) und dem Traggehäuse (1) angeordneten vierten Strömungskanalmodul (24), wobei zum Dehnungsausgleich das dritte und vierte Strömungskanalmodul (23, 24) in über C-förmige Dichtringe (50a) mit innen liegender Spiralfeder (50b) abgedichteten Verschiebesitzen am zweiten Messgehäusemodul (23) gehalten sind.

6. Testvorrichtung nach Anspruch 3, **dadurch gekennzeichnet, dass** an den Messgehäusemodulen (19, 23) jeweils zwischen Flanschen (28 bis 31) verschwenkbare Trommeln (36, 37) mit an diesen austauschbar angebrachten, mit Sensoren bestückten Messrechen (38, 39) und Mikrofonen (40) vorgesehen sind.

7. Testvorrichtung nach Anspruch 1, **dadurch gekennzeichnet, dass** die im Innern des Außengehäuses angeordneten Einbauten am ersten Messgehäusemodul (19) gehaltene Bypassstrom-Leitschaufeln (41) umfassen, die mit einem äußeren Rohrelement (43) und über Kernstrom-Leitschaufeln (42) mit einem inneren Rohrelement (44) verbunden sind, wobei die Bypassstrom-Leitschaufeln (41) und die Kernstrom-Leitschaufeln (42) nichttragende und unabhängig von der Rotorlagerung nur am Außengehäuse angebrachte Strukturen sind.

8. Testvorrichtung nach Anspruch 7, **dadurch gekennzeichnet, dass** die an den Tragschaufeln (9) und an der Stützstruktur (10) abgestützten Rohrelemente (43, 44) zusammen mit den Tragrohren (7, 8) der stationären Grundstruktur einen Kernstromkanal (46) bilden, während zwischen dem äußeren Rohrelement (43) und dem anschließenden äußeren Tragrohr (7) einerseits sowie der Innenfläche der Messgehäusemodule (19, 23), der Strömungskanalmodule (20 bis 22, 24) sowie des Traggehäuses (1) andererseits ein Bypassstromkanal (45) gebildet ist.

9. Testvorrichtung nach Anspruch 1, **dadurch gekennzeichnet, dass** die akustische oder aerodynamische Auskleidung (48) aus am Innen- und Außenumfang des Bypassstromkanals (45) positionierten, halbschalenförmigen Linersegmenten besteht, die bündig aneinander gefügt miteinander verbunden sind.

10. Testvorrichtung nach Anspruch 9, **dadurch gekennzeichnet, dass** die Linersegmente für die akustische Auskleidung (48) an der Innenfläche des Fangehäusemoduls (18) stromauf und stromab des Fans (17) angebracht sind.

11. Testvorrichtung nach Anspruch 1, **dadurch gekennzeichnet, dass** am Außenumfang des Fangehäusemoduls (18) zwei in einem bestimmten Winkel zueinander versetzt angeordnete Präzisionsfernrohre (33) angebracht sind, die zur Einstellung jeweils einer zur Mittelachse (34) parallelen optischen Achse (35) auf jeweils eine am Traggehäuse (1) in gleicher Position angebrachte optische Linse (32)gerichtet sind, und dass an den vorderen und hinteren Flanschen (28, 29; 30, 31) der flurseitig an den Stützsäulen (25) einstellbar abgestützten Messgehäusemodule (19, 23) ebenfalls jeweils zwei in Umfangsrichtung in gleichem Winkel versetzte optische Linsen (32) angebracht sind, um die Messgehäusemodule (19, 23) entlang der optischen Achse (35) ausrichten zu können.

## Claims

1. A test device for the fan of an aircraft engine for determining the acoustic and aerodynamic behavior and the performance data, the test device comprising an outer housing which is attached on the end side to a test stand wall (6) and is intended for receiving the fan (17) and a drive shaft (13) connected to the latter, wherein
a stationary, inner basic structure (1, 7 to 11) which is designed as a cantilever support held on the test stand wall (6) and is intended for supporting the drive shaft (13); and internal components (41 to 44) which are arranged interchangeably in the interior of the outer housing and are intended for transferring the air flow generated by the fan (17) to a bypass and a core flow duct (45, 46) and as an acoustic and/or aerodynamic liner (48) of the bypass flow duct (45) are provided; **characterized in that**
the outer housing comprises a plurality of mobile and interchangeable outer housing modules (18 to 24) which are connected releaseably and in a sealing manner to one another, which are respectively supported on the floor and adjustable in the X, Y and Z directions and to which an optical device is assigned for coaxial alignment; and
measuring devices (38 to 40) which are arranged interchangeably in the bypass flow duct (45) and are connected to a telemetry unit of modular design are provided.

2. The test device as claimed in claim 1, **characterized in that** the stationary basic structure comprises a supporting housing (1) which consists of three concentrically arranged supporting rings (3 to 5), is fastened to the test stand wall (6) and has an outer supporting tube (7) and an inner supporting tube (8) respectively protruding from the inner supporting rings (4, 5) of said supporting housing, and the drive shaft (13) being supported on the inner supporting tube (8) via a bearing structure (10) and bearing rings (11) and also bearings (12), the free ends of the supporting tubes (7, 8) being connected to one another and to the bearing structure (10) via supporting vanes (9), and the outer supporting ring (3) of the supporting housing (1) forming a stationary part of the outer housing.

3. The test device as claimed in claim 1, **characterized in that** the mobile part of the outer housing comprises a fan housing module (18) and at least one measuring housing module (19, 23) which is provided with measuring means for detecting the acoustic and aerodynamic behavior and the performance of the fan (17) in conjunction with the internal components adjoining downstream, said measuring housing modules being fastened adjustably in the X, Y and Z directions to bearing pillars (25), and also comprises flow duct modules (20 to 22, 24) which are fastened between the measuring housing modules (19, 23) and the supporting housing (1) and directly to the latter, with at least one flow duct module being mounted in a sealing manner in a sliding seat to compensate for expansion.

4. The test device as claimed in claim 3, **characterized in that** the bearing pillars (25) are arranged displaceably in guide rails (26) attached integrally to the supporting framework (1) of the test stand.

5. The test device as claimed in claim 3, **characterized by** a first measuring housing module (19) adjoining the fan housing module (18) and by a second measuring housing module (23) with first to third flow duct modules (20 to 22) arranged between said measuring housing modules, and a fourth flow duct module (24) arranged between the second measuring housing module (23) and the supporting housing (1), with the third and fourth flow duct modules (23, 24) being held on the second measuring housing module (23) in sliding seats, which are sealed via C-shaped sealing rings (50a) having an inner spiral spring (50b), to compensate for expansion.

6. The test device as claimed in claim 3, **characterized in that** drums (36, 37) which can each be pivoted between flanges (28 to 31) on the measuring housing modules (19, 23) are provided with rakes (38, 39) and microphones (40) which are attached interchangeably to said drums and are equipped with sensors.

7. The test device as claimed in claim 1, **characterized in that** the internal components arranged in the interior of the outer housing comprise bypass flow guide vanes (41) which are held on the first measuring housing module (19) and are connected to an outer tube element (43) and, via core flow guide vanes (42) to an inner tube element (44), the bypass flow guide vanes (41) and the core flow guide vanes (42) being non-supporting structures which are attached only to the outer housing irrespective of the mounting of the rotor.

8. The test device as claimed in claim 7, **characterized in that** the tube elements (43, 44) which are supported on the supporting vanes (9) and on the bearing structure (10) together with the supporting tubes (7, 8) of the stationary basic structure form a core flow duct (46) while a bypass flow duct (45) is formed between the outer tube element (43) and the adjoining, outer supporting tube (7), on the one hand, and the inner surface of the measuring housing modules (19, 23), the flow duct modules (20 to 22, 24) and the supporting housing (1), on the other hand.

9. The test device as claimed in claim 1, **characterized in that** the acoustic or aerodynamic liner (48) consists of liner segments which are positioned on the inner and outer circumferences of the bypass flow duct (45), are in the form of half shells and are connected to one another in a manner joined flush to one another.

10. The test device as claimed in claim 9, **characterized in that** the liner segments for the acoustic liner (48) are attached to the inner surface of the fan housing module (18) upstream and downstream of the fan (17).

11. The test device as claimed in claim 1, **characterized in that** two precision telescopes (33) are attached to the outer circumference of the fan housing module (18), said precision telescopes being offset with respect to each other at a certain angle, in order to adjust a respective optical axis (35) which is parallel to the center axis (34), are each aligned with an optical lens (32) attached to the supporting housing (1) in the same position, and **in that** two optical lenses (32) which are offset at the same angle in the circumferential direction are likewise attached in each case to the front and rear flanges (28, 29; 30, 31) of the measuring housing modules (19, 23), which are supported adjustably on the floor side on the bearing pillars (25), in order to be able to align the measuring housing modules (19, 23) along the optical axis (35).

## Revendications

1. Un dispositif de test pour le ventilateur d'un moteur de l'aéronef pour déterminer le comportement acoustique et aérodynamique et les données de performance, comprenant un boîtier extérieur monté frontalement sur une paroi du banc d'essai (6) et destiné à recevoir le ventilateur (17) et un arbre d'entraînement (13) relié à celui-ci,
dans lequel une structure de base interne fixe (1, 7 à 11) formée par un poutre maintenu par la paroi du banc d'essai (6) sert de supporter l'arbre d'entraînement (13) ; et
des composants internes (41 à 44) disposées à l'intérieur du boîtier extérieur et de manière échangeable pour transférer le débit d'air généré par le ventilateur (17) vers un canal d'écoulement de dérivation et d'écoulement central (45, 46) et pour jouer le rôle d'un revêtement aérodynamique et / ou acoustique (48) du canal d'écoulement de dérivation (45) sont prévus;
**caractérisé en ce que**
le boîtier extérieur comprend plusieurs modules de boîtier extérieur échangeables, mobiles et interconnectés l'un à l'autre de manière étanche et amovible (18 à 24), dont chacun est appuyé sur le côté du corridor et est réglable en directions X, Y et Z et auxquels un dispositif optique est associé pour un alignement coaxial; et
des dispositifs de mesure (38 à 40) connectées à une unité de télémétrie formée de manière modulaire et disposées de manière échangeable dans le canal d'écoulement de dérivation (45) sont prévus.

2. Le dispositif de test selon la revendication 1, **caractérisé en ce que** la structure de base fixe comprend un boîtier de support (1) fixé sur la paroi du banc d'essai (6) et composé de trois bagues de support (3 à 5) disposées concentriquement et comprenant respectivement un tube de support extérieur (7) et un tube de support intérieur (8) saillant des bagues de support intérieures (4, 5) de celui-ci, sur lequel l'arbre d'entraînement (13) par l'intermédiaire d'une structure de support (10) et des bagues de support de palier (11) et des paliers (12) est supporté, dans lequel les extrémités libres des tubes de support (7, 8) par l'intermédiaire de lames de support (9) sont reliés entre eux et à la structure de support (10) et la bague extérieure de support (3) du boîtier de support (1) forme une partie fixe du boîtier extérieur.

3. Le dispositif de test selon la revendication 1, **caractérisé en ce que** la partie mobile du boîtier extérieur comprend un module de boîtier de ventilateur (18) et au moins un module de boîtier de mesure (19, 23) prévu avec des dispositifs de mesure pour la détection du comportement acoustique et aérodynamique et la performance du ventilateur (17) en relation avec les composants internes se rattachant en aval, lesquels sont fixés de manière réglable en directions X, Y et Z à des colonnes de support (25) et des modules de canal d'écoulement (20 à 22, 24) fixés directement à ceux-ci et entre les modules de boîtier de mesure (19, 23) et le boîtier de support (1), dans lequel au moins un module de canal d'écoulement est monté dans un siège coulissant de manière étanche pour compenser la dilatation.

4. Le dispositif de test selon la revendication 3, **caractérisé en ce que** les colonnes de support (25) sont disposées de manière déplaçable dans des rails de guidage (26) montés de manière intégrale dans le châssis de support (1) du banc d'essai.

5. Le dispositif de test selon la revendication 3, **caractérisé par** un premier module de boîtier de mesure (19) se rattachant au module de boîtier de ventilateur (18) et un second module de boîtier de mesure (23) avec des premier à troisième modules de canal d'écoulement (20 à 22) disposés entre ceux-ci et un quatrième module de canal d'écoulement (24) disposé entre le second module de boîtier de mesure (23) et le boîtier de support (1), dans lequel le troisième et quatrième module de canal d'écoulement (23, 24) sont tenus dans des sièges coulissants étanchés par des bagues d'étanchéité en forme de C (50a) avec un ressort spiral interne (50b) au second module de boîtier de mesure (23) pour compenser la dilatation.

6. Le dispositif de test selon la revendication 3, **caractérisé en ce qu'**aux modules de boîtier de mesure (19, 23) sont prévus des tambours (36, 37) qui pivotent respectivement entre des brides (28 à 31) et ont des râteaux de mesure (38, 39) et des microphones (40) équipés avec des capteurs montés de façon échangeable à ceux-ci.

7. Le dispositif de test selon la revendication 1, **caractérisé en ce que** les composants intérieurs arrangés à l'intérieur du boîtier extérieur comprennent des aubes de guidage d'écoulement de dérivation (41) tenus au premier module de boîtier de mesure (19) qui sont reliées à un élément de tube extérieur (43) et par des aubes de guidage d'écoulement central (42) à un élément tubulaire interne (44), dans lequel les aubes de guidage d'écoulement de dérivation (41) et les aubes de guidage d'écoulement central (42) sont des structures non-porteuses et arrangées de manière indépendante de l'arrangement du rotor seulement au boîtier extérieur.

8. Le dispositif de test selon la revendication 7, **caractérisé en ce que** les éléments tubulaires (43, 44) supportés aux lames de support (9) et à la structure de support (10) forment avec les tubes de support (7, 8) de la structure de base fixe un canal d'écoulement central (46), tandis qu'un canal d'écoulement de dérivation (45) est formé entre l'élément tubulaire extérieur (43) et le tube de support extérieure (7) rattaché d'une part et la surface interne des modules de boîtier de mesure (19, 23), les modules de canal d'écoulement (20 à 22, 24) et le boîtier de support (1) d'autre part.

9. Le dispositif de test selon la revendication 1, **caractérisé en ce que** le revêtement acoustique ou aérodynamique (48) consiste en segments de ligne en forme de demi-coquille qui sont positionnés à la périphérie interne et externe du canal d'écoulement de dérivation (45) et qui sont reliés entre eux et reliés les uns aux autres au ras.

10. Le dispositif de test selon la revendication 9, **caractérisé en ce que** les segments de ligne pour le revêtement acoustique (48) sont arrangés sur la surface intérieure du module de boîtier de ventilateur (18) en amont et en aval du ventilateur (17).

11. Le dispositif de test selon la revendication 1, **caractérisé en ce qu'**à la circonférence extérieure du module de boîtier de ventilateur (18) sont montés deux télescopes de précision agencés (33) qui sont arrangés à une position décalée les uns des autres à un angle prédéterminé et qui sont orientés respectivement vers une lentille optique (32) arrangée sur le boîtier de support (1) en même position pour ajuster respectivement un axe optique (35) qui est parallèle à l'axe central (34), et **en ce que** sur les brides avant et arrière (28, 29; 30, 31) des modules boîtier de mesure (19, 23) supportés de manière réglable au côté couloir par des colonnes de support de modules (25) sont montées respectivement également deux lentilles optiques (32) qui sont dans la direction circonférentielle à une position décalée à un angle prédéterminé pour pouvoir aligner les modules de boîtier de mesure (19, 23) le long de l'axe optique (35).
